# EUROPEAN PATENT APPLICATION

(11) **EP 2 172 689 A1**
(43) Date of publication of application: **07.04.2010**
(21) Application number: 08790154.2
(22) Date of filing: 07.07.2008
(51) Int. Cl.: F21S 2/00, F21V 7/00, F21V 7/09, F21V 7/10, G02F 1/13357, H01L 33/00, F21Y 101/02

(54) **SURFACE ILLUMINATION UNIT, SURFACE ILLUMINATION LIGHT SOURCE, AND SURFACE ILLUMINATION DEVICE**

(30) Priority: 26.07.2007 JP 2007195183
(71) Applicant: Opto Design, Inc., Hachioji-shi, Tokyo 192-0364 (JP)
(72) Inventor: SATO, Eiichi, Hachioji-shi Tokyo 1920364 (JP); FUKUOKA, Kenji, Hachioji-shi Tokyo 192-0364 (JP)
(74) Representative: HOFFMANN EITLE
(86) International application number: PCT/JP2008/001802
(87) International publication number: WO 2009/013859

(57) **Abstract**

A surface illumination unit including: a casing having a bottom surface, side walls formed on a pair of opposite lateral surfaces, and openings formed at positions for the other pair of lateral surfaces; and an optical reflector plate arranged at a certain distance from the bottom surface. Each side wall has a reflective surface both on the inner face and outer face thereof.

## Description

### TECHNICAL FIELD

The present invention relates to a surface illumination unit, a surface illumination light source device, and a surface illumination device used for, for example: LCD backlight devices;'illumination boards; and a display device for automobiles, vehicles, or the like.

### BACKGROUND ART

Use of light emitting diodes (LEDs) as light sources for display devices, illumination devices, and the like is discussed because LEDs consume less electricity and generate less heat. However, LEDs have high directionality, and thus require ingenuity in order to obtain uniform light distribution over a wide area.

For example, a technique disclosed in Patent Document 1 includes a lamp housing having an opening on one end and having a light source accommodation portion whose inner wall is a light reflective surface; a light emitting diode provided in the light source accommodation portion; and a display plate provided in front of the opening. Thus, through diffusing and reflecting, light from the light emitting diode is uniformized.

Further, to obtain a surface illumination device of an arbitral size, the surface illumination device is formed by arranging a plurality of surface illumination light source devices in a matrix.

However, no ingenuity has been applied in a configuration and an arrangement of the surface illumination light source devices upon using a plurality thereof.

By simply arranging the surface illumination light source devices, luminance at a peripheral area of each device is lowered. Thus, obtaining a uniform illumination as a whole is difficult.

Patent Document 1: Japanese Patent Application Publication No. 2003-186427

### DISCLOSURE OF INVENTION

An object of the present invention is to provide a surface illumination unit, a surface illumination light source device, and a surface illumination device that can be manufactured easily and at a low cost.

To achieve the object, the present invention is configured as follows.

According to an aspect of the present invention, a surface illumination unit of the present invention includes: a casing having a bottom surface, side walls formed on a pair of opposite lateral surfaces, and openings formed at the positions for the other lateral surfaces; and an optical reflector plate arranged opposite to and at a certain distance from the bottom surface to be substantially in parallel therewith, in which each side walls has a reflective surface both on an inner face and an outer face.

The bottom surface, the side walls, and the optical reflector plate are preferably formed to be in a single continuous plane when the surface illumination unit is unfolded.

According to another aspect of the present invention, a surface illumination light source device of the present invention includes the surface illumination unit and a group of light sources configured by combining one or a plurality of light radiating bodies arranged substantially at the center of the bottom surface.

According to still another aspect of the present invention, in a surface illumination device of the present invention composed of a plurality of surface illumination light source devices arranged in a matrix, a first surface illumination unit and a second surface illumination unit are so arranged that a side wall of the first surface illumination unit is in contact with the above described opened lateral surface of the neighboring second surface illumination unit.

According to yet still another aspect of the present invention, a method for manufacturing the surface illumination unit according to the present invention includes: forming the bottom surface, the side walls, and the optical reflector plate by punching out a single plate.

With the present invention, a surface illumination unit can be manufactured easily and at a low cost. Further, a plurality of surface illumination units arranged to form a surface illumination device can be used efficiently.

### BRIEF DESCRIPTION OF THE DRAWINGS

Fig. 1 is a perspective view of a surface illumination unit according to an embodiment of the present invention.
Fig. 2 is an unfolded view of the surface illumination unit according to an embodiment of the present invention.
Fig. 3 is a sectional view of a surface illumination light source device formed with the surface illumination unit according to an embodiment of the present invention.
Fig. 4 is a perspective view of a surface illumination device according to an embodiment of the present invention.

### BEST MODE(S) FOR CARRYING OUT THE INVENTION

An embodiment of the present invention is described below with reference to the accompanying drawings.

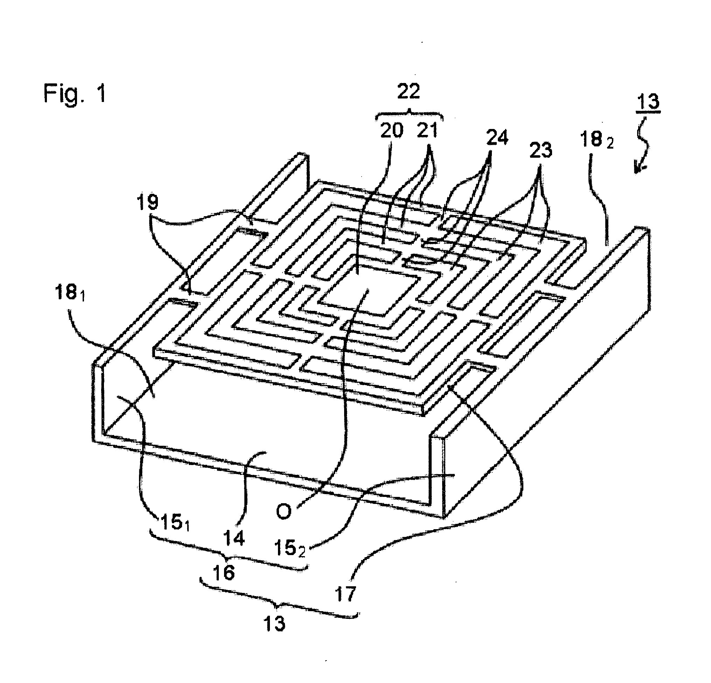

Fig. 1 is a perspective view of a surface illumination unit according to an embodiment of the present invention.

A surface illumination unit 13 includes: a casing 16 having a square bottom surface 14 and side walls 15₁ and 15₂ formed on a pair of opposite lateral surfaces that stand from the bottom surface 14; and an optical reflector plate 17. The other pair of opposite lateral surfaces of the surface illumination unit 18 is formed to be openings. The other opposite lateral surfaces formed to be openings are referred to as openings 18₁ and 18₂. Thus, the surface illumination unit 13 as a whole has a shape of a box having the openings (181 and 182) at the positions for the pair of lateral surfaces. Reflective surfaces are formed at inner and outer faces of the bottom surface 14 and the side walls 15₁ and 15₂ and light is reflected thereby.

The optical reflector plate 17 is arranged to be opposite to the bottom surface 14 and at a certain distance upward therefrom in the figure. Supporting sections 19 connect the optical reflector plate 17 with the side walls 15₁ and 15₂. The optical reflector plate 17 may directly be connected to the side walls 15₁ and 15₂ without the supporting sections 19.

The optical reflector plate 17 as a whole has a rectangular shape. The optical reflector plate 17 includes: a reflection section 22 having a rectangular center reflection section 20 at the center thereof and a plurality of rectangular annular reflection sections 21 concentric with respect to the center O thereof; and reflector plate openings 23 provided between the center reflection section 20 and one of the annular reflection sections 21 and between the annular reflection section 21 and the annular reflection section 21. Connecting sections 24 partially and integrally connect the center reflection section 20 and the annular reflection sections 21 opposite to and neighboring to each other across the reflector plate openings 23 in the single plane. The supporting sections 19 are integrally formed with one of the annular reflection sections 21 positioned most outwardly.

The reflection section 22 has a reflective surface at least at a side facing the bottom surface 14 and light from a light source 11 is reflected thereby. The reflector plate openings 23 are through holes through which the light can pass.

In the present embodiment, the bottom surface 14, the side walls 151 and 152, and the optical reflector plate 17 are formed by folding a single plate punched out in a prescribed shape.

Low light absorbent materials are used for the single plate. Thus, one of an ultrafinely foamed reflection plate, a substance obtained by emulsifying particulates of titanium white, and particulates of polytetrafluoroethylene (poly fluoro carbon); or a combination thereof is used.

In the present invention, as the surface illumination unit 13, a cuboid of 10 cm × 10 cm × 1.5 cm (height) is used, for example. However, the size of the surface illumination unit 13 is not limited thereto.

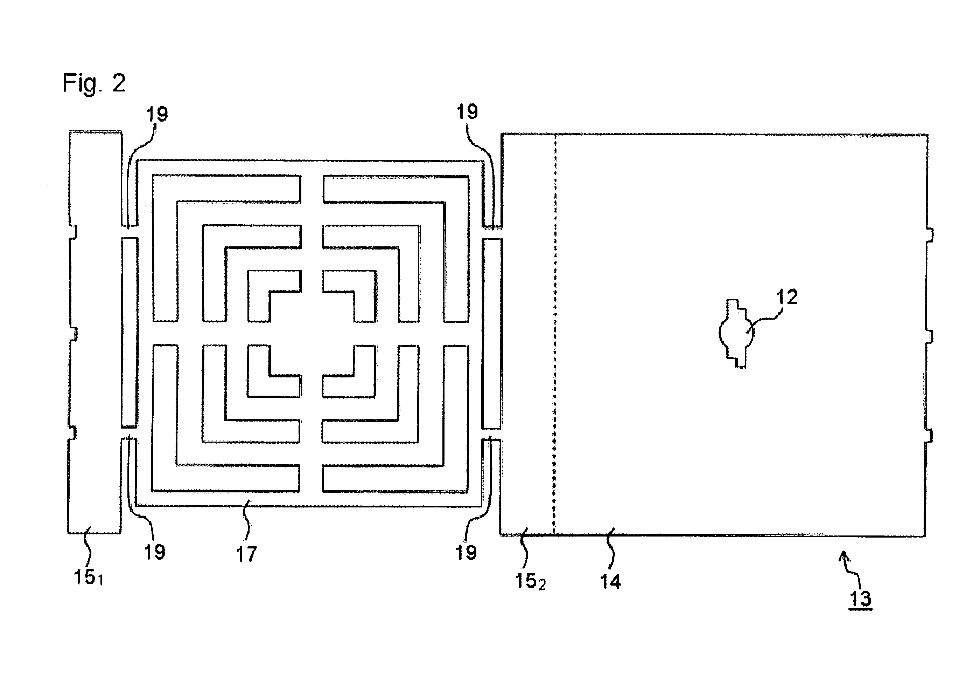

Fig. 2 is an unfolded view of the surface illumination unit according to an embodiment of the present invention.

In a description below, as elements having the same reference numerals in the figure are identical elements and or elements exerting similar effects, the descriptions thereof may be omitted.

In Fig. 2, the surface illumination unit 13 according to the present invention includes the bottom surface 14, the side walls 15₁ and 15₂, the optical reflector plate 17, and the supporting sections 19. The bottom surface 14, the side walls 15₁ and 15₂, the optical reflector plate 17, and the supporting sections 19 are formed by punching out a single plate by means of a press and further by folding the resultant plate, whereby the surface illumination unit 13 is formed. Therefore, the surface illumination unit 13 in an unfolded state is a single continuous plate.

A hole 12 for accepting the light source 11 is provided substantially at the center of the bottom surface 14.

The surface illumination unit 13 according to the present invention can be formed by punching out a single rectangular plate into a prescribed shape and then folding the resultant plate. In addition, as no side walls are formed on the pair of other lateral surfaces, manufacturing of the surface illumination unit 13 can easily be done at a low cost.

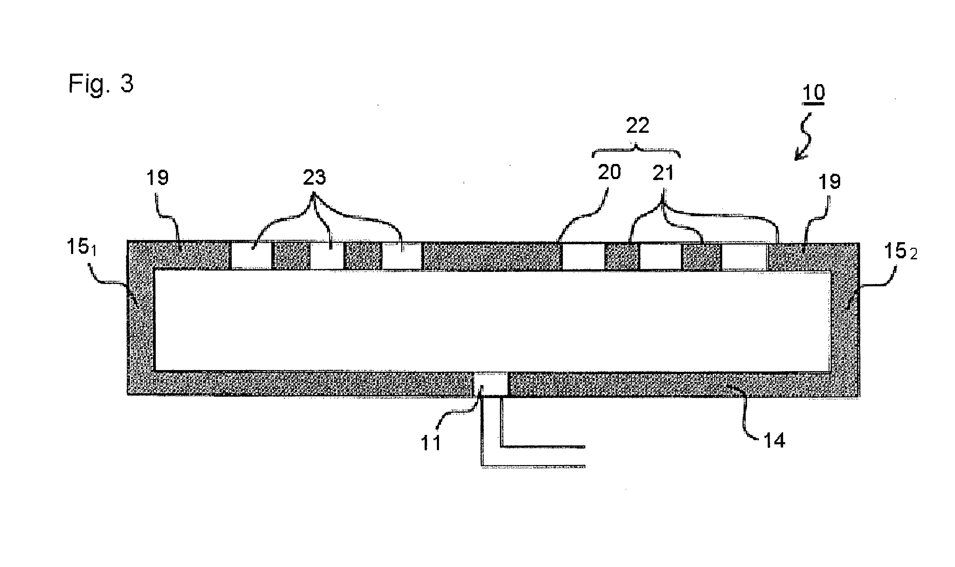

Fig. 3 is a sectional view of a surface illumination light source device formed with the surface illumination unit according to the present invention.

This surface illumination light source device 10 according to the present invention has a group of light sources 11 configured by combining one or a plurality of light radiating bodies disposed at the hole 12 provided substantially at the center of the bottom surface 14 of the surface illumination unit 13.

The scope of the light source 11 includes not only elements that emit light from themselves such as light emitting diodes or laser diodes (LDs), but also light guided by light guiding wires or the like. Further, the light source 11 includes not only point-light sources such as light emitting diodes or filament bulbs, but also linear-light sources such as cold-cathode tubes. Also, the light source 11 includes not only a case of a single light emitting element, but also cases in which a plurality of light emitting elements are arranged closely to one another as a group. Further, it includes cases in which light emitting elements of the light's three primary colors of red, blue, and green are closely arranged.

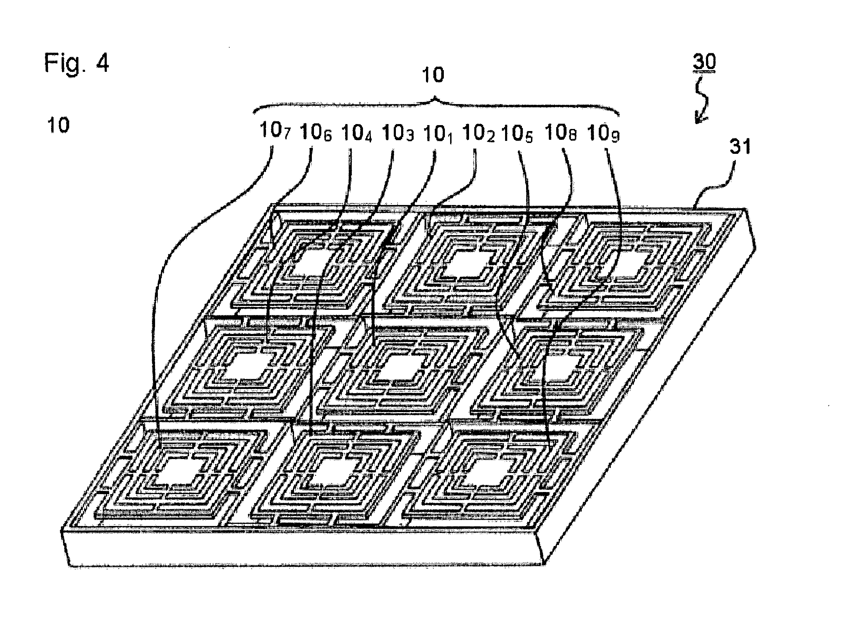

Fig. 4 is a perspective view of a surface illumination device according to an embodiment of the present invention.

This surface illumination device 30 according to the present embodiment is formed by arranging a plurality of the above described surface illumination light source devices 10 in a matrix.

Number of the surface illumination light source devices 10 being used is changed to so that a surface illumination device 30 of a desired size can be formed. In the present embodiment, a case is described where nine (three by three) surface illumination light source devices 10 are used.

The surface illumination light source devices 10 are arranged to be in matrix in a single plane within a frame 31 of the surface illumination device 30. The frame 31 has a reflective surface at an inner face thereof to reflect the light from the light source 11. In the present embodiment, the frame 31 and the surface illumination unit 13 are formed of the same materials.

Neighboring surface illumination light source devices 10 are arranged at 90 degrees relative to each other. That is, the arrangement is such that the opening 18₁ (or 18₂) of the surface illumination light source device 10 is in close contact with the side wall 15₁ (or 15₂) of the neighboring surface illumination light source device 10. Thus, an outer face of the side wall of the neighboring surface illumination light source device 10 serves as an inner face of the side wall of the neighboring surface illumination light source device 10. Further, in a case where the openings of the surface illumination light source devices 10 arranged most outwardly in the surface illumination device 30 have no side walls in contact thereto, the openings thereof are in close contact with the frame 31 so that the frame 31 serves as the side walls.

Specifically, openings of a surface illumination light source device 10₁ are in close contact with side walls of a surface illumination light source device 10₂ and a surface illumination light source device 10₃ neighboring thereto. Side walls of the surface illumination light source device 10₁ are in close contact with openings of a surface illumination light source device 10₄ and a surface illumination light source device 10₅ neighboring thereto. Meanwhile, surface illumination light source devices 10₄, 10₅, 10₆, 10₇, 10₈, 10₉ arranged most outwardly in the surface illumination device 30 each have one of their openings in close contact with the frame 31.

The surface illumination light source device 10 has all of its four sides surrounded by side walls. Light from the light source 11 is reflected by the bottom surface, the optical reflector plate, inner faces of the side wall thereof, and outer faces of the side walls of the neighboring surface illumination light source devices 10 and is radiated from the openings of the optical reflector plate.

In the surface illumination device 30 according to the present embodiment, both reflective surface of the surface illumination light source device 10 and the outer faces of the side walls of other surface illumination light source devices 10 neighboring thereto are used as the reflective surface. Thus, bright and uniform illumination can be obtained. Further, as the outer faces of the side walls of other surface illumination light source device 10 are used as the reflective surface, the surface illumination light source devices 10 can be efficiently used. As the surface illumination light source device 10 has no side walls at the positions for the openings 19, the manufacturing thereof can be easily done at a low cost.

## Claims

1. A surface illumination unit comprising:
a casing having:
a bottom surface;
side walls formed on a pair of opposite lateral surfaces; and
openings formed at positions for other pair of opposite lateral surfaces; and
an optical reflector plate arranged opposite to and at a certain distance from the bottom surface to be substantially in parallel therewith, wherein
the side walls have reflective surfaces on inner faces facing each other and at outer faces at reverse sides of the inner faces.

2. The surface illumination unit according to claim 1, wherein the bottom surface, the side walls, and the optical reflector plate are formed to be in a continuous single plane when the surface illumination device is unfolded.

3. A surface illumination light source device comprising:
the surface illumination unit according to claim 1; and
a group of light sources configured by combining one or a plurality of light radiating bodies disposed substantially at a center of the bottom surface.

4. A surface illumination device formed by plurally arranging the surface illumination light source device according to claim 3 in a matrix in a single plane, wherein
a first surface illumination unit and a neighboring second surface illumination unit are so disposed that a side wall of the first surface illumination unit is in contact with an opening of the second surface illumination unit.

5. A method for manufacturing the surface illumination unit according to claim 1, the method comprising:
forming the bottom surface, the side walls, and the optical reflector plate by punching out a single plate

## Amended claims

### Amended claims under Art. 19.1 PCT

**1.** (Amended) A surface illumination unit comprising:
a casing having
a bottom surface having a through hole for a light source at a center, and
side walls formed on a pair of opposite lateral surfaces, in which
other pair of opposite lateral surfaces are opened; and
an optical reflector plate arranged opposite to and at a certain distance from the bottom surface to be substantially in parallel therewith, the plate having
a reflection section that reflects light from the light source, and
an opening through which the light passes, wherein
a reflective surface is formed on a surface of the bottom surface, inner and outer surfaces of the side walls, and an inner side of the optical reflector plate.

**2.** (Amended) The surface illumination unit according to claim 1, wherein one of the side walls and one of sides of the optical reflector plate are integrally connected.

**3.** (Amended) A surface illumination unit formed by plurally arranging the surface illumination unit according to claim 1 on a single plane, wherein
a first surface illumination unit and a neighboring second surface illumination unit are so disposed that the side wall of the first surface illumination unit is in contact with the opened lateral surface of the second surface illumination unit is in contact.

**4.** (Amended) A surface illumination light source device comprising:
the surface illumination unit according to claim 1 or 3; and
a group of light sources configured by combining one or a plurality of light radiating bodies disposed in the through hole.

**5.** (Deleted)
